# EUROPÄISCHE PATENTSCHRIFT

(11) **EP 0 628 397 B1**
(45) Veröffentlichungstag und Bekanntmachung des Hinweises auf die Patenterteilung: **10.09.1997**
(21) Anmeldenummer: 94108080.6
(22) Anmeldetag: 25.05.1994
(51) Int. Cl.: B29C 49/00, B29C 33/36

(54) **Vorrichtung zum Herstellen von Wellrohren aus thermoplastischem Kunststoff**
Device for manufacturing of corrugated pipes made of thermoplastic synthetic material
Dispositif de production de tubes ondulés en matière thermoplastique

(30) Priorität: 03.06.1993 DE 4318514
(43) Veröffentlichungstag der Anmeldung: 14.12.1994
(73) Patentinhaber: DROSSBACH GmbH & Co. KG, D-86641 Rain (DE)
(72) Erfinder: Dietrich, Karl, D-86641 Rain (DE)
(74) Vertreter: Gossel, Hans K., Dipl.-Ing.

(56) Entgegenhaltungen:
- EP-A- 0 007 556
- EP-A- 0 270 694
- DE-A- 1 918 336
- US-A- 4 365 948

## Beschreibung

Die Erfindung betrifft eine Vorrichtung zum Herstellen von Wellrohren aus thermoplastischem Kunststoff mit einer im Anschluß an einen Spritzkopf eines Extruders angeordneten Formstrecke, die aus einer in einem Gestell angeordneten Führung besteht, auf der in einem Einlauf paarweise zu ringförmigen Formen geschlossene Formhälften dicht aufeinanderfolgend als wandernde Form durch mindestens ein im Anfangsbereich der Formstrecke angeordnetes Antriebsritzel vorgeschoben werden, das mit Zahnstangen der zusammengeschobenen Formhälften kämmt, mit einem der Formstrecke folgenden Auslauf, in dem die Formhälften voneinander getrennt und von mit Kupplungseinrichtungen versehenen Greifarmen erfaßt und von diesen wieder in den Einlauf eingeführt werden, wobei die Greifarme durch Antriebe beweglich auf Schlitten gelagert sind, die auf Führungen von zu der Formstrecke parallelen Rücklaufstrecken durch Antriebe hin- und herverfahrbar sind, und mit die Bewegungen der Greifarme und des Schlittens steuernden Einrichtungen.

Zum Herstellen von Wellrohren, bei denen es sich um Kunststoffrohre mit Querprofilierung, insbesondere mit ring- oder schraubenlinienförmigen Querwellen handelt, ist es bekannt, an zwei endlosen, umlaufenden Ketten Formhälften zu befestigen, die im Anschluß an einen Spritzkopf eines Extruders in der Formstrecke zu zwei zueinander parallelen Reihen in der Weise zusammengeschoben werden, daß die Formhälften jeder Reihe paarweise dicht aneinanderliegende Hohlformen bilden. Diese bekannten Vorrichtungen sind zur Herstellung von Wellrohren kleinerer Durchmesser geeignet, da es bei diesen in Kauf genommen werden kann, daß auch in den Rücklaufstrecken die Formhälften dicht aufeinanderfolgend gefördert werden.

Sollen jedoch Wellrohre mit größeren Durchmessern hergestellt werden, werden entsprechend größer dimensionierte Formhälften benötigt, deren Herstellung aufwendig ist und die daher einen erheblichen Investitionsaufwand bedeuten. Um mit der geringstmöglichen Anzahl von Formhälften auszukommen, sind daher Vorrichtungen bekannt, bei denen die Formhälften nur in der Formstrecke zu dicht aufeinanderliegenden Folgen zusammengeführt sind, während sie einzeln mit größerer Geschwindigkeit über die Rücklaufstrecken zurückgefördert werden, so daß es grundsätzlich nur notwendig ist, jeweils in jeder Rücklaufstrecke nur eine Formhälfte zu fördern, und sich dadurch die zur Herstellung von Wellrohren erforderliche Anzahl von Formhälften auf ein Minimum beschränkt.

Bei einer aus EP-B-0 270 694 bekannten Vorrichtung zur Herstellung von Wellrohren bestehen die die Formhälften über die Rücklaufstrecken zurückführenden Fördereinrichtungen aus zwei längs der Form- oder Arbeitsstrecke im Abstand von dieser verlaufenden Rückförderern und vier Querförderern, die die Formhälften zwischen den Ein- und Ausläufen einerseits und den Rücklaufstrecken andererseits in Querrichtung fördern. Jeder der Rückförderer besitzt jeweils unterhalb des Formhälftenweges ein endloses Zugglied mit einem in Förderrichtung des jeweiligen Förderers umlaufenden Trum. Dabei tragen die Zugglieder Mitnehmer, die am Beginn des Förderweges mit den Formhälften in Eingriff kommen, diese mitnehmen und am Ende der Rücklaufstrecke wieder außer Eingriff mit den Formhälften kommen. Während bei dieser bekannten Vorrichtung der Rücktransport der Formhälften über die Rücklaufstrecke problemlos möglich ist, ergeben sich jedoch gewisse Schwierigkeiten bei der Querförderung der Formhälften durch die Querförderer, da diese ein verkantungs- und stoßfreies Aneinanderfügen der Formhälften in dem Einlauf und ein entsprechend behinderungsfreies Auseinanderführen der Formhälften im Auslauf bewirken müssen.

Bei einer aus EP-B-0 007 556 bekannten Vorrichtung der eingangs angegebenen Art wird das Problem des verkantungs- und anstoßfreien Anlegens der Formhälften im Einlauf der Formstrecke und des störungsfreien Herausziehens der Formhälften im Auslauf der Arbeitsstrecke dadurch gelöst, daß die auf den Schlitten angeordneten Greifarme aus schwenkbar gelagerten Schwenkarmen bestehen, die es durch entsprechende Steuerung der Schwenkbewegung ermöglichen, daß sich der translatorischen Schlittenbewegung eine Schwenkbewegung in der Weise überlagern läßt, daß die Formhälften beim Einfügen im Einlauf in die Formstrecke und beim Herausführen im Auslauf der Formstrecke auf gewünschten schrägen und gekrümmten Kurvenbahnen geführt werden können. Diese bekannte Vorrichtung weist jedoch die Nachteile auf, daß komplizierte Steuerungen erforderlich sind, um durch Überlagerung der Schwenkbewegung der Schwenkarme und der translatorischen Schlittenbewegung die gewünschten Führungsbahnen für die Formhälften zu erreichen, und daß die Lagerungen der Schwenkarme sehr groß ausgeführt werden müssen, damit diese bei dem erheblichen Gewicht der Formhälften die erforderlichen Momente übertragen können. Weiterhin müssen bei den bekannten Schwenkarmen zusätzliche Maßnahmen getroffen werden, um zu verhindern, daß diese bei dem Herausführen der Formhälften aus dem Auslauf und bei dem Einfügen der Formhälften in den Einlauf diesen Drehbewegungen erteilen.

Bei der bekannten Vorrichtung sind daher die Schwenkarme als Parallellenkersysteme ausgeführt, die die Formhälften derart verschwenken, daß diese bei den Schwenkbewegungen parallel zu sich selbst bleiben. Die bekannte Vorrichtung bedingt daher auch durch die Ausbildung der Schwenkarme als Parallellenkersysteme aufwendige und kostspielige Konstruktionen.

Aufgabe der Erfindung ist es daher, eine Vorrichtung der eingangs angegebenen Art zu schaffen, bei der sich die Greifarme bei einfachem und stabilem Aufbau in einfacher Weise steuern lassen.

Erfindungsgemäß wird diese Aufgabe bei einer Vorrichtung der gattungsgemäßen Art dadurch gelöst, daß die Greifarme in Führungen des Schlittens ausschließlich quer zu dessen Bewegungsbahn verfahrbar sind. Die erfindungsgemäße Vorrichtung gestattet eine einfache Steuerung der Schlitten und der nur querverschieblich in diesen geführten Greifarme, da beide nur rechtwinkelig zueinander liegende Bewegungen ausführen können, die sich in einem Koordinatensystem darstellen lassen. Weiterhin läßt sich jeder Greifarm in einfacher Weise in jedem Schlitten lagern, da er aus einem geraden Arm besteht, dessen Lagerungen auf dem Schlitten einen so großen Abstand voneinander aufweisen, daß das von diesem auf den Schlitten übertragene Kippmoment bei einfacher Konstruktion und bei einfach beherrschbaren Lagerreaktionen abgefangen werden kann. Da der Greifarm nur rechtwinkelige Querbewegungen zu der Führungsbahn des Schlittens ausführen kann, brauchen auch keine zusätzlichen Maßnahmen getroffen zu werden, um unerwünschte Drehungen der Formhälften bei dem Transport zu verhindern.

Ein Ausführungsbeispiel der Erfindung wird nachstehend anhand der Zeichnung näher erläutert. In dieser zeigt
- Fig. 1: eine Draufsicht auf die Vorrichtung zum Herstellen von Wellrohren aus thermoplastischem Kunststoff in schematischer Darstellung und
- Fig. 2: eine Rückansicht der Vorrichtung nach Fig. 1 in Richtung des Pfeils Z in Fig. 1.

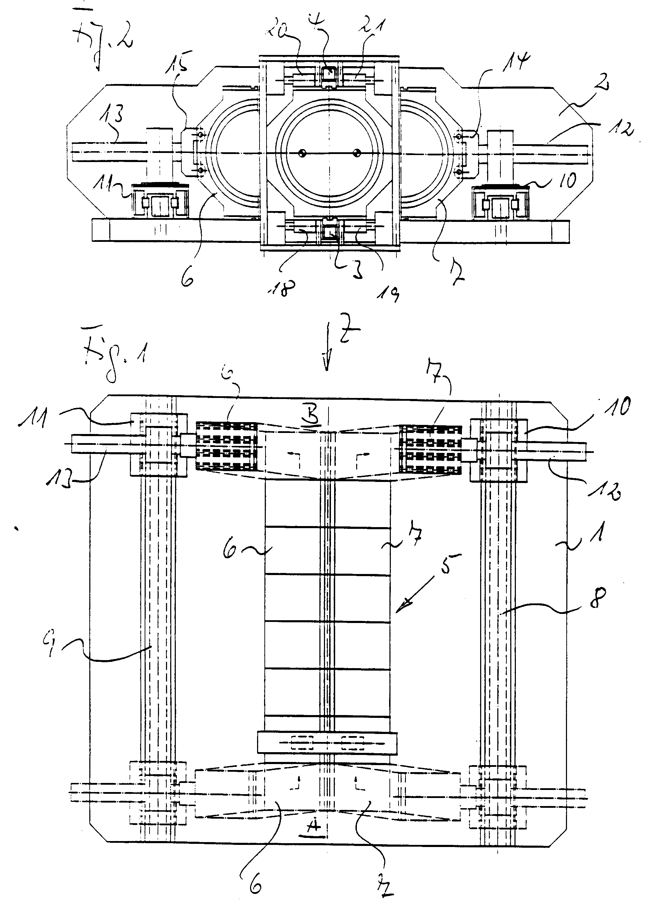

In dem Maschinengestell 2 mit dem Grundrahmen 1 sind zentrale Führungen 3, 4 für die in der Form- oder Arbeitsstrecke 5 paarweise zusammengeschobenen Formhälften 6, 7 vorgesehen, die eine wandernde Form für das aus dem nicht dargestellten Spritzkopf eines Extruders extrudierte Rohr bilden.

Seitlich der Formstrecke 5 sind auf dem Grundrahmen 1 zu der Formstrecke 5 parallele Führungen 8, 9 vorgesehen, auf denen Schlitten 10, 11 durch nicht dargestellte Antriebe zwischen dem Einlauf A und dem Auslauf B verfahrbar geführt sind. In den Schlitten 10, 11 sind die geraden Greifarme 12, 13 in Führungen querverschieblich geführt. Zur Querverschiebung der Greifarme 12, 13 in den Schlitten 10, 11 sind ebenfalls nicht dargestellte Antriebe vorgesehen, die aus Spindeln oder hydraulischen Kolben-Zylinder-Einheiten bestehen können.

Die Greifarme 12, 13 tragen an ihren inneren, einander zugewandten Enden Kupplungseinrichtungen 14, 15, die an entsprechenden Gegenkupplungseinrichtungen der Formhälften 6, 7 kuppelnd angreifen. Weiterhin sind nicht dargestellte Einrichtungen zum einfachen Ankuppeln und Entkuppeln vorgesehen.

Die im Einlauf A im Anschluß an den Spritzkopf des Extruders zu ringförmig geschlossenen Formabschnitten zusammengeschobenen Formhälften 6, 7 werden durch die Arbeitsstrecke 5 durch im Gestell gelagerte Ritzel 18, 19 und 20, 21 vorgeschoben, die jeweils mit an den Ober- und Unterseiten der Formhälften 6, 7 angeordneten Zahnstangen in Eingriff kommen.

Durch entsprechende Steuerung der linearen Antriebe der Schlitten 10, 11 und der Greifarme 12, 13 werden die Formhälften 6, 7 im Einlauf derart auf schrägen Bahnen zusammengeführt, daß sie nach Berührung der vorauslaufenden, zusammengeschobenen Formhälften mit der synchronen Arbeitsgeschwindigkeit durch die Formstrecke 5 vorgeschoben und gleichzeitig in Querrichtung aufeinander zu verschoben werden, bis sie zur Bildung geschlossener, ringförmiger Formabschnitte aneinander liegen.

Im Auslauf B werden die Formhälften 6, 7 auf entsprechend schräg verlaufenden Bahnen auseinandergefahren, bis sie auf den Rücklaufstrecken von den Schlitten wieder zum Einlauf zurückgeführt werden.

## Patentansprüche

1. Vorrichtung zum Herstellen von Wellrohren aus thermoplastischem Kunststoff,
mit einer im Anschluß an einen Spritzkopf eines Extruders angeordneten Formstrecke (5), die aus einer in einem Gestell (2) angeordneten Führung besteht, auf der in einem Einlauf (A) paarweise zu ringförmigen Formen geschlossene Formhälften (6, 7) dicht aufeinanderfolgend als wandernde Form durch mindestens ein im Anfangsbereich der Formstrecke angeordnetes Antriebsritzel (18 *-* 21) vorgeschoben werden, das mit Zahnstangen der zusammengeschobenen Formhälften kämmt,
mit einem der Formstrecke folgenden Auslauf (B), in dem die Formhälften voneinander getrennt und von mit Kupplungseinrichtungen (14, 15) versehenen Greifarmen (12, 13) erfaßt und von diesen wieder in den Einlauf eingefügt werden, wobei die Greifarme durch Antriebe beweglich auf Schlitten (10, 11) gelagert sind, die auf Führungen (8, 9) von zu der Formstrecke parallelen Rücklaufstrecken durch Antriebe hin- und herverfahrbar sind, und
mit die Bewegungen der Greifarme und der Schlitten steuernden Einrichtungen,
**dadurch gekennzeichnet,**
daß die Greifarme in Führungen des Schlittens ausschließlich quer zu dessen Bewegungsbahn verfahrbar sind.

## Claims

1. Device for the manufacture of corrugated pipes made of thermoplastic synthetic material,
with, extending from an extrusion head, a moulding section (5) comprising a guide arranged in a frame (2), on which guide mould halves (6, 7) closed in pairs in an inlet (A) to form annular moulds, are advanced in a tightly packed sequence as a migratory mould by at least one drive pinion (18 - 21) arranged at the starting zone of the moulding section and meshing with racks on the packed mould halves,
with, following the moulding section, a runout zone (B) in which the mould halves are separated from each other and engaged by gripper arms (12, 13), these being provided with coupling devices (14, 15), which return said mould halves into the inlet end, said gripper arms being actuator-operated and mounted on carriages (10, 11) which are driven back and forth on guides (8, 9) of return tracks arranged parallel to the moulding section, and
with devices to control the motions of the gripper arms and the carriages,
**characterised in that**
the gripper arms located in guides on the carriage are exclusively traversible in a direction transverse to the direction of travel of said carriage.

## Revendications

1. Dispositif de production de tubes ondulés en matière synthétique thermoplastique,
avec un trajet de moulage (15) disposé à la suite d'une tête d'injection d'une extrudeuse qui est constitué d'un guidage disposé dans un bâti (2) sur lequel, dans une entrée (A), des moitiés de moule (6, 7) réunies par paires en des moules annulaires sont poussées en se suivant de près, en tant que moule migrant, par au moins un pignon d'entraînement (18-21) disposé dans la zone d'entrée du trajet de moulage, qui engrène avec des crémaillères des moitiés de moule réunies par poussée,
avec une sortie (B) faisant suite au trajet de moulage où les moitiés de moule sont séparées les unes des autres et sont saisies par des bras de préhension (12, 13) pourvus de dispositifs d'accouplement (14, 15) et sont ramenés par ceux-ci de nouveau dans l'entrée, les bras de préhension étant logés, de manière déplaçable par des commandes, sur des chariots (10, 11) qui sont déplaçables sur des guidages (8, 9) par des commandes suivant un mouvement alternatif sur des trajets de retour parallèles au trajet de moulage et,
avec des dispositifs commandant les mouvements des bras de préhension et des chariots,
caractérisé
en ce que les bras de préhension sont déplaçables dans des guidages du chariot exclusivement transversalement à la trajectoire de celui-ci.
